# EUROPEAN PATENT SPECIFICATION

(11) **EP 1 515 478 B1**
(45) Date of publication and mention of the grant of the patent: **09.07.2008**
(21) Application number: 03760545.8
(22) Date of filing: 29.05.2003
(51) Int. Cl.: H04L 12/26

(54) **A NETWORK MANAGEMENT CENTRALIZATION ALARM BOX AND ALARM PROCESSING METHOD**
NETZWERKVERWALTUNGSZENTRALISIERUNGS-ALARMBOX UND ALARMVERARBEITUNGSVERFAHREN
BOITIER D'ALARME SERVANT A CENTRALISER LA GESTION D'UN RESEAU ET TRAITEMENT DE L'ALARME

(30) Priority: 19.06.2002 CN 02124642
(43) Date of publication of application: 16.03.2005
(73) Proprietor: Huawei Technologies Co., Ltd., Guangdong 518057 (CN)
(72) Inventor: XIE, Gengui, Huawei Service Centre Building, Shenzhen, Guangdong 518057 (CN); WANG, Hao, Huawei Sevice Centre Building, Shenzhen, Guangdong 518057 (CN); SONG, Lianchang, Huawei Service Centre Building, Shenzhen, Guangdong 518057 (CN); CHEN, Zhaohui, Huawei Service Centre Building, Shenzhen, Guangdong 518057 (CN); LI, Tengyue, Huawei Service Centre Building, Shenzhen, Guangdong 518057 (CN)
(74) Representative: Brand, Martin G.
(86) International application number: PCT/CN2003/000410
(87) International publication number: WO 2004/002063

(56) References cited:
- EP-A- 1 172 967
- WO-A-99/09708
- JP-A- 2000 200 101
- KR-A- 970 029 132
- US-A1- 2002 029 266

## Description

### Field of the Invention

The present invention relates to telecom intelligent network (IN) field, particularly to a network management concentrated alarm box and the alarm processing method thereof, which is designed to refine the network management system (NMS).

### Background of the Invention

During the operation and maintenance of equipments, audible/visible alarm message is requisite. For equipment suppliers, providing audible/visible alarm message is a fundamental function of equipments.

Audible/visible alarm message is usually provided through alarm boxes.

Presently, alarm boxes are driven by the alarm cards in the host computers; and one alarm box corresponds to one alarm card, i.e., an alarm box can only be connected to a single alarm card, and an alarm card can only manage a single module; therefore, when multiple modules are superimposed at system expansion, multiple alarm boxes are required to provide audible/visible signals for those modules. In this case, the driving for the alarm boxes can only be maintained locally instead of remotely, hence it can't meet the demands of users.

Document WO 99/09708A disclosed a method to control different types of network elements with the same management system by connecting the network elements into the management system using a conversion element. Document US 2002/029266 A1 disclosed a method and a management network entity for forwarding and processing Alarm Information (AI) such as alarm notifications and alarm lists in an Alarm Management System (AMS).

### Summary of the Invention

An object of the present invention is to provide a network management concentrated alarm box and the alarm processing method thereof, which is easy to implement, cooperates closely with the NMS, delivers automatic handshaking function, and can detect online (or offline) of the alarm box and recover to alarm state after the connection recovers from interruption.

According to an aspect of the present invention, it is provided a network management concentrated alarm box, comprising:
An alarm background module designed to receive all alarm message frames from the NMS and forward the alarm message frames to the alarm box interface module;
An alarm box interface module designed to convert the received alarm message frames into alarm message frames in the communication protocol of the alarm box, send the alarm message frames to the alarmbox via a serial interface, receive operation commands from the alarm box foreground, and control the alarm box accordingly;
An alarm box designed to process the alarm message frames by type in a concentrated manner.

Wherein the alarm box interface module comprises:
A module that receives and converts message frames from the alarm background module, designed to receive the alarm message frames and setting message frames from the alarm background module and convert the alarm message frames and setting message frames into message frames that can be received by the alarm box management module;
A module that analyzes, processes, filters, and stores the message frames, designed to filter, analyze, and process converted message frames and convert the message frames into the format acceptable by the alarmbox, and then store the message frames to the pending message buffer;
A pending message buffer, designed to store message frames in the format acceptable by the alarm box and send the message frames to the alarm box;
A module for analyzing active reporting message frames by the alarm box, designed to receive response frames or active reporting frames by the alarm box, distinguish the types of response frames and the active reporting frames, and process the message frames by type accordingly after analysis and determination.

According to another aspect of the present invention, it is provided an alarm processing method for said network management concentrated alarm box, comprising the steps of:
a. The alarm background module receiving all alarm message frames from the NMS and forwarding them to the alarmbox interface module;
b. The alarm box interface module converting the received alarm message frames into alarm message frames in the communication protocol of an alarm box and sending the alarm message frames to the alarm box via a serial interface; and
c. The alarm box interface module receiving operation commands selected from a group comprising stop alarm sound, turn off alarm indicator, set alarm sound parameters and filter alarm message frames, and controlling the alarm box accordingly;
d. The alarmbox interface module retrieving response frames and active reporting frames by the alarm box and analyzing and determining the types of the reporting frames;
e. The alarm box interface module processing the reporting frames by type accordingly and sending the result to the alarm box, which sends audible and/or visible alarms.

Wherein, the step of the alarm box interface module converting the received alarm message frames into alarm message frames in the communication protocol of the alarm box in step b further comprises the steps of:
b₁. In the alarm box interface module, the module that receives and converts alarm message frames from the alarm background module converting alarm message frames and setting message frames from the alarm background module into message frames receivable by the alarm box management module; herein, the conversion includes conversion of frame formats and conversion of alarm levels;
b₂. In the alarm box interface module, the module that analyzes, processes, filters, and stores message frames filtering, analyzing, and processing the converted message frames, and then converting the resulting message frames into frames acceptable by the alarm box, and then sending them to the pending message buffer of the alarm box interface module; herein the step further comprises the steps of:
   b₂₁. Determining the types of the converted message frames; if they are setting message frames, then going to step b₂₅; otherwise:
      b₂₂. Filtering the alarm message frames according to the filtering conditions attached to them, then filtering the resulting alarm message frames according to the filtering conditions contained in the configuration file, and then discarding the alarm message frames that will not be sent to the alarm box;
      b₂₃. Analyzing the filtered alarm message frames; if they are fault alarm frames, converting them into alarmmessage frames and storing them to the alarm message list, and then converting the resulting alarm message frames into the format acceptable by the alarm box and storing them to the pending message buffer; if they are recovery alarm frames, converting them into the format acceptable by the alarm box and storing to the pending message buffer, and then deleting the corresponding alarm message frames in the alarm list;
      b₂₄. Sorting the alarm frames, in the format acceptable by the alarm box, in the pending message buffer by priority, so that alarm message frames with high priority can be sent to the alarm box in precedence;
      b₂₅. If the frames are setting message frames that instruct to light up a specific indicator, processing them as fault alarm frames; if the frames are setting message frames that instruct to turn off a specific indicator, converting them to alarm message frames, deleting all corresponding fault alarm frames in the alarm message list, and then converting the alarm message frames into the format acceptable by the alarm box and storing them, herein, the number of storage operations equals to that of the deletion operations; if the frames are other setting message frames, converting them into frames in the format acceptable by the alarm box directly to store.

Hereunder the basic composition and the working principle of the present invention are described in detail, with reference to the attached drawing.

### Brief Description of the Drawing

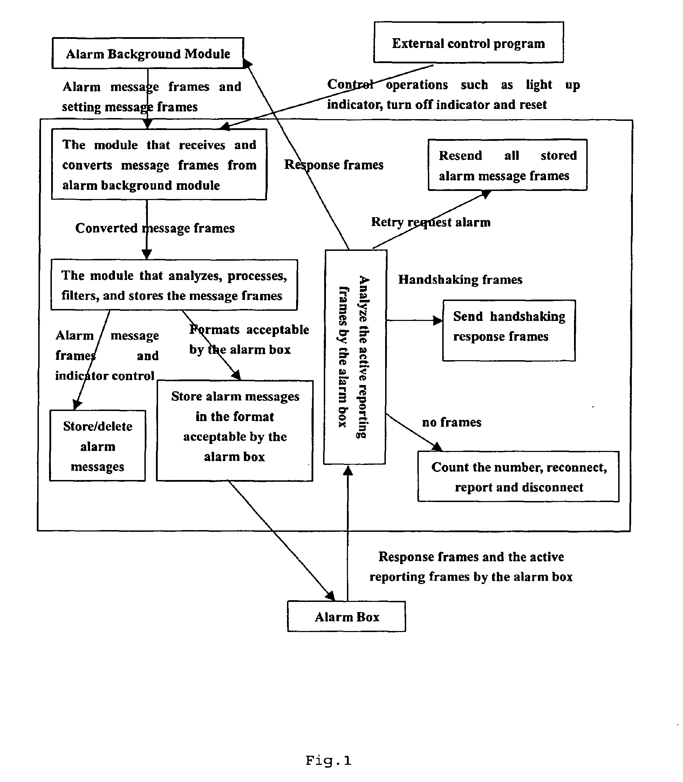

Fig.1 is a schematic diagram of the composition and the processing flowchart of the present invention.

### Detailed Description of the Embodiments

As shown in Fig. 1, the network management concentrated alarm box according to the present invention comprises:
An alarm background module designed to receive all alarm message frames from the NMS and forward them to the alarm box interface module;
An alarm box interface module designed to convert the received alarm message frames and setting message frames into alarm message frames in the communication protocol of the alarm box, send the alarm message frames and setting message frames to the alarm box via a serial interface, receive operation commands, such as light up indicator, turn off indicator and reset from external control program, sent from the alarm box foreground, and then control the alarm box accordingly;
An alarm box designed to process the alarm message frames by type in a concentrated manner.

Wherein the alarm box interface module comprises:
A module that receives and converts message frames from the alarm background module, designed to receive alarm message frames and setting message frames from the alarm background module and convert the alarm message frames and setting message frames into message frames that can be received by the original alarm box management module;
A module that analyzes, processes, filters, and stores the message frames, designed to filter, analyze, and process converted message frames and convert the message frames into the format acceptable by the alarm box, and then store the message frames to the pending message buffer;
A pending message buffer, designed to store message frames in the format acceptable by the alarm box and send the message frames to the alarm box, comprising an alarm message storage/deletion module and a module that stores message formats acceptable by the alarm box; wherein the alarm message storage/deletion module stores/deletes converted alarm message frames and indicator control commands, the module that stores message formats acceptable by the alarm box stores the alarm message frames in the format acceptable by the alarm box and sends to the alarm box;
A module for analyzing active reporting message frames by the alarm box, designed to receive response frames or active reporting frames by the alarm box, distinguish the types of response frames and the active reporting frames, and process the message frames by type accordingly after analysis and determination; if the frames are request frames, sends them to the alarm background module; if they are retry request frames, resends all the stored alarm message frames; if they are handshaking frames, sends handshaking response frames, counts the number, reconnects and reports offline.

An alarm processing method for said network management concentrated alarm box according to the present invention comprises the steps of:
a. The alarm background module receiving all alarm message frames and setting message frames from the NMS and forwarding them to the alarm box interface module;
b. The alarm box interface module converting the received alarm message frames into alarm message frames in the communication protocol of the alarm box and sending the alarm message frames to the alarm box via a serial interface; wherein, the step of the alarm box interface module converting the received alarm message frames into alarm message frames in the communication protocol of the alarm box in step b further comprises the steps of:
   b₁. In the alarm box interface module, the module that receives and converts alarm message frames from the alarm background module converting alarm message frames and setting message frames from the alarm background module into message frames receivable by the alarm box management module; herein, the conversion includes conversion of high and lower bytes, conversion of frame formats, and conversion of alarm levels;
   b₂. In the alarm box interface module, the module that analyzes, processes, filters, and stores message frames filtering, analyzing, and processing the converted message frames, and then converting the resulting message frames into frames acceptable by the alarm box, and then sending them to the pending message buffer of the alarm box interface module; herein the step further comprises the steps of:
      b₂₁. Determining the types of the converted message frames; if they are setting message frames, then going to step b₂₅; otherwise:
         b₂₂. Filtering the alarm message frames according to the filtering conditions attached to them, then filtering the resulting alarm message frames according to the filtering conditions contained in the configuration file, and then discarding the alarm message frames that will not be sent to the alarm box;
         b₂₃. Analyzing the filtered alarm message frames; if they are fault alarm frames, converting them into alarm message frames and storing them to the alarm message list, and then converting the resulting alarm message frames into the format acceptable by the alarm box and storing them to the pending message buffer; if they are recovery alarm frames, converting them into the format acceptable by the alarm box and storing to the pending message buffer, and then deleting the corresponding alarm message frames in the alarm list;
         b₂₄. Sorting the alarm frames, in the format acceptable by the alarm box, in the pending message buffer by priority, so that alarm message frames with high priority can be sent to the alarm box in precedence;
         b₂₅. If the frames are setting message frames that instruct to light up a specific indicator, processing them as fault alarm frames; if the frames are setting message frames that instruct to turn off a specific indicator, converting them into alarm message frames, deleting all corresponding fault alarm frames in the alarm message list, and then converting the alarm message frames into the format acceptable by the alarm box and storing them, herein, the number of storage operations equals to that of the deletion operations; if the frames are other setting message frames, converting them into the format acceptable by the alarm box directly.
c. The alarm box interface module receiving operation commands such as stop alarm sound, turn off alarm indicator, set alarm sound parameters and filter alarm message frames, and controlling the alarm box accordingly; said step c comprises the steps of:
   c₁. The alarm box foreground sending the operation commands such as stop alarm sound, turn off alarm indicator, set alarm sound parameters, filter alarm message frames, etc. to the alarm box interface module via the forwarding messages from the Message Distribution Center of NMS;
   c₂. The alarm box interface module controlling the alarm box according to the received operation commands such as stop alarmsound, turnoff alarmindicator, setalarmsoundparameters, filter alarm message frames, etc;
   c₃. The alarm box interface module sending handshaking signals to the alarm box foreground via the forwarding messages from the Message Distribution Center of NMS, in order to confirm the alarm background module works normally.
d. The alarmbox interface module retrieving response frames and the active reporting frames by the alarm box and analyzing and determining the types of the reporting frames; said step d mainly comprises the steps of:
   d₁. The alarm box interface module searching for response frames and the active reporting frames by the alarm box every one second;
   d₂. In the alarm box interface module, the module that analyzes active reporting frames by the alarm box receiving response frames and the active reporting frames by the alarm box and distinguishing the types of the reporting frames.
e. The alarm box interface module processing the reporting frames by type accordingly and sending all the message frames to the alarm box, which sends audible and visible alarms; said step e mainly comprises the following steps of:
   e₁. In the alarm box interface module, the module that analyzes active reporting frames by the alarm box performing the corresponding operations according to the types of the reporting frames:
      e₂. If the frames are handshaking frames, sending response frames;
      e₃. If the frames are retry request frames, resending all fault alarm message frames;
      e₄. If the frames are other reporting message frames, retrieving its value for the alarm background module to be invoked;
      e₅. If not receiving frames, counting the number; if not receiving 5 successive frames, reconnecting; if no handshaking frame is available in 3 successive connection operations, setting the connection state of the alarm box as offline, and reporting to the alarm background module;
      e₆. At the same time, the alarm box interface module checking the pending message buffer every one second, and sending all content of the pending message buffer into the alarm box, so that the alarm box can send audible and visible alarms.

## Claims

1. An alarm processing method for a network management concentrated alarm box, comprising the steps of:
a. by an alarm background module, receiving all alarm message frames from a network management system and forwarding them to an alarm box interface module;
b. by said alarm box interface module, converting the received alarm message frames into alarm message frames in the communication protocol of an alarm box and sending the alarm message frames to said alarm box via a serial interface after processing; and
c. by said alarm box interface module, receiving operation commands selected from a group comprising stop alarm sound, turn off alarm indicator, set alarm sound parameters and filter alarm message frames, and controlling said alarm box accordingly;
d. by said alarm box interface module, retrieving response frames and active reporting frames by said alarm box, and analyzing and determining the types of the reporting frames;
e. by said alarm box interface module, processing the reporting frames by type accordingly and sending the result to said alarm box, which sends an audible and/or visible alarm.

2. An alarm processing method for a network management concentrated alarm box according to claim 1, wherein step b comprises the steps of:
b₁. setting message frames from said alarm background module intomessage frames receivable by an alarm box management module;
b₂. sending the analyzed and converted message frames to a pending message buffer of said alarm box interface module.

3. An alarm processing method for a network management concentrated alarm box according to claim 2, wherein in the step b₁ said converting includes converting of frame formats and converting of alarm levels.

4. An alarm processing method for a network management concentrated alarm box according to claim 2, wherein step b₂ comprises the following steps of:
b₂₁.determining the types of the converted message frames; if they are setting message frames, then going to step b₂₅; otherwise:
b₂₂. filtering the alarm message frames according to the filtering conditions attached to them, then filtering the resulting alarm message frames according to the filtering conditions contained in a configuration file, and then discarding the alarm message frames that will not be sent to said alarm box;
b₂₃. analyzing the filtered alarm message frames; if they are fault alarm frames, converting them into alarm message frames and storing them to an alarm message list, and then converting the resulting alarm message frames into the format acceptable by the alarm box and storing them into said pending message buffer; if they are recovery alarm frames, converting them into the format acceptable by said alarm box and storing them into said pending message buffer, and then deleting the corresponding alarm message frames in said alarm list;
b₂₄. sorting the alarm frames in the format acceptable by the alarm box in said pending message buffer by priority, so that alarm message frames with high priority can be sent to the alarm box in precedence;
b₂₅. if the frames are setting message frames that instruct to light up a specific indicator, processing them as fault alarm message frames; if the frames are setting message frames that instruct to turn off a specific indicator, converting them into alarm message frames, deleting all corresponding fault alarm frames in the alarm message list, and then converting the alarm message frames into frames in the format acceptable by the alarm box and storing them, herein, the number of storage operations equals to that of the deletion operations; if the frames are other setting message frames, converting them into frames in the format acceptable by said alarm box directly to store.

5. An alarm processing method for a network management concentrated alarm box according to claim 1, wherein said step c comprises the steps of:
c₁. by an alarm box foreground module, sending the operation commands selected from a group comprising stop alarm sound, turn off alarm indicator, set alarm sound parameters and filter alarm message frames to the alarm box interface module using a forwarding message from a Message Distribution Center of the network management system to the alarm box interface module ;
C₂. by said alarm box interface module, controlling the alarm box according to the received operation commands selected from a group comprising stop alarm sound, turn off alarm indicator, set alarm sound parameters and filter alarm message frames;
c₃. by said alarm box interface module, sending handshaking signals to the alarm box foreground module using a forwarding message from said Message Distribution Center of the network management system to the alarm box foreground module , in order to confirm that said alarm background module works normally.

6. An alarm processing method for a network management concentrated alarm box according to claim 1, wherein the step d comprises the steps of:
d₁.by said alarm box interface module, searching for response frames and active reporting frames by said alarm box every one second;
d₂. by said alarm box interface module, distinguishing the types of the reporting frames.

7. An alarm processing method for a network management concentrated alarm box according to claim 2, wherein step e comprises the steps of:
e₁. by said alarm box interface module, performing the corresponding operations according to the types of the reporting frames;
e₂. if the frames are handshaking frames, sending response frames;
e₃. if the frames are retry request frames, resending all fault alarm message frames;
e₄. if the frames are other reporting message frames, retrieving the value for the alarm background module to be invoked;
e₅. if not receiving frames from the alarm box, counting the number; if not receiving 5 successive frames, reconnecting; if no handshaking frame is available in 3 successive connection operations, setting the connection state of the alarm box as offline, and reporting to the alarm background module;
e₆. at the same time, the alarm box interface module checking said pending message buffer every one second, and sending all content of said pending message buffer into said alarm box, so that said alarm box can send audible and/or visible alarms.

8. A network management concentrated alarm box for alarm processing comprising:
an alarm background module designed to receive all alarm message frames from a network management system and forward them to an alarm box interface module;
said alarm box interface module designed to convert the received alarm message frames into alarm message frames in the communication protocol of an alarm box, send the alarm message frames to said alarm box via a serial interface, receive operation commands from an alarm box foreground module, and control said alarm box accordingly;
said alarm box designed to process the alarm message frames by type in a concentrated manner and send an audible and/or visible alarm.

9. A network management concentrated alarm box according to claim 8, wherein said alarm box interface module comprises:
a module that receives and converts message frames from the alarm background module, designed to receive alarm message frames and setting message frames from the alarm background module and convert the alarm message frames and setting message frames into message frames that can be received by the alarm box management module;
a module that analyzes, processes, filters, and stores the message frames, designed to filter, analyze, and process converted message frames and convert the message frames into the format acceptable by the alarmbox, and then store the message frames to a pending message buffer;
a pending message buffer, designed to store message frames in the format acceptable by said alarm box and send the message frames to said alarm box; and
a module for analyzing active reporting message frames by said alarm box, designed to receive response frames or active reporting frames by said alarm box, distinguish the types of response frames and active reporting frames, and process the message frames by type accordingly after analysis and determination.

## Patentansprüche

1. Verfahren zur Verarbeitung von Alarmen für eine auf Netzwerk-Management ausgerichtete Alarm-Box, umfassend die folgenden Schritte:
a. Durch ein Alarm-Hintergrundmodul Empfangen aller Alarmmeldungs-Rahmen von einem Netzwerkmanagement-System und deren Weiterleitung an ein Schnittstellenmodul der Alarm-Box;
b. Durch das Schnittstellenmodul der Alarm-Box Umwandlung der empfangenen Alarmmeldungs-Rahmen in Alarmmeldungs-Rahmen im Kommunikationsprotokoll einer Alarm-Box und nach der Verarbeitung Senden der Alarmmeldungs-Rahmen über eine serielle Schnittstelle an die Alarm-Box; und
c. Durch das Schnittstellenmodul der Alarm-Box Empfangen von Betriebs-Befehlen, die aus einer Gruppe ausgewählt sind, die Stopp des Alarmtones, Ausschalten der Alarmanzeige, Einstellen von Alarmton-Parametern und Filtern von Alarmmeldungs-Rahmen umfasst, und entsprechende Steuerung der Alarm-Box;
d. Durch das Schnittstellenmodul der Alarm-Box Abruf von Antwort-Rahmen und aktiver Berichts-Rahmen durch die Alarm-Box, und Analysieren und Bestimmen der Arten der Berichts-Rahmen;
e. Durch das Schnittstellenmodul der Alarm-Box entsprechende Verarbeitung der Berichts-Rahmen nach Typ und Senden des Ergebnisses an die Alarm-Box, die einen hörbaren und/oder sichtbaren Alarm sendet.

2. Verfahren zur Verarbeitung von Alarmen für eine auf Netzwerk-Management ausgerichtete Alarm-Box gemäß Anspruch 1, wobei Schritt b folgende Schritte umfasst:
b₁. Einsetzen von Meldungs-Rahmen von dem Alarm-Hintergrundmodul in Meldungs-Rahmen, die von einem Alarm-Box-Management-Modul empfangen werden können;
b₂. Senden der analysierten und umgewandelten Meldungs-Rahmen in einen Puffer für anstehende Meldungen des Schnittstellenmoduls der Alarm-Box.

3. Verfahren zur Verarbeitung von Alarmen für eine auf Netzwerk-Management ausgerichtete Alarm-Box gemäß Anspruch 2, wobei in Schritt b₁ die Umwandlung die Umwandlung von Rahmenformaten und die Umwandlung von Alarm-Ebenen umfasst.

4. Verfahren zur Verarbeitung von Alarmen für eine auf Netzwerk-Management ausgerichtete Alarm-Box gemäß Anspruch 2, wobei Schritt b₂ folgende Schritte umfasst:
b₂₁. Bestimmen der Arten der umgewandelten Meldungs-Rahmen; wenn sie Einstellungs-Meldungs-Rahmen sind, weiter bei Schritt b₂₅; andernfalls:
b₂₂. Filtern der Alarmmeldungs-Rahmen entsprechend der ihnen angefügten Filterbedingungen, dann Filtern der resultierenden Alarmmeldungs-Rahmen entsprechend der Filterbedingungen, die in einer Konfigurationsdatei enthalten sind, und dann Verwerfen der Alarmmeldungs-Rahmen, die nicht an die Alarm-Box gesendet werden;
b₂₃. Analysieren der gefilterten Alarmmeldungs-Rahmen; wenn es Fehler-Alarm-Rahmen sind, deren Umwandeln in Alarmmeldungs-Rahmen und deren Speichern in einer Alarmmeldungs-Liste,' und dann Umwandeln der resultierenden Alarmmeldungs-Rahmen in das Format, das von der Alarm-Box akzeptiert werden kann, und deren Speichern in dem Puffer für anstehende Meldungen; wenn es Wiederanlauf-Alarm-Rahmen sind, deren Umwandeln in das Format, das von der Alarm-Box akzeptiert werden kann, und deren Speichern in dem Puffer für anstehende Meldungen, und dann Löschen der entsprechenden Alarmmeldungs-Rahmen in der Alarm-Liste;
b₂₄. Sortieren der Alarm-Rahmen in dem Format, das von der Alarm-Box akzeptiert werden kann, in dem Puffer für anstehende Meldungen nach Priorität, so dass Alarmmeldungs-Rahmen mit hoher Priorität mit Vorrang an die Alarm-Box gesendet werden können;
b₂₅. Wenn die Rahmen Einstellungs-Meldungen sind, die die Anweisung geben, eine spezielle Anzeige aufleuchten zu lassen, deren Verarbeitung als Fehler-Alarm-Meldungs-Rahmen; wenn die Rahmen Einstellungs-Meldungen sind, die die Anweisung geben, eine spezielle Anzeige auszuschalten, deren Umwandlung in Alarmmeldungs-Rahmen, Löschen aller entsprechenden Fehler-Alarm-Rahmen in der Alarmmeldungs-Liste, und dann Umwandeln der Alarmmeldungs-Rahmen in Rahmen in dem Format, das von der Alarm-Box akzeptiert werden kann, und deren Speichern, dabei ist die Anzahl der SpeicherOperationen gleich der der Lösch-Operationen; wenn die Rahmen andere Einstellungs-Rahmen sind, deren Umwandeln in Rahmen in dem Format, das von der Alarm-Box akzeptiert werden kann, um sie direkt zu speichern.

5. Verfahren zur Verarbeitung von Alarmen für eine auf Netzwerk-Management ausgerichtete Alarm-Box gemäß Anspruch 1, wobei der Schritt c folgende Schritte umfasst:
c₁. Durch ein Vordergrundmodul der Alarm-Box Senden der Betriebs-Befehle, die aus einer Gruppe ausgewählt sind, die Stopp des Alarmtones, Ausschalten der Alarmanzeige, Einstellen von Alarmton-Parametern und Filtern von Alarmmeldungs-Rahmen umfasst, an das Schnittstellenmodul der Alarm-Box unter Verwendung einer Weiterleitungs-Meldung von einem Meldungs-Verteilungs-Zentrum des Netzwerk-Management-Systems an das Schnittstellenmodul der Alarm-Box;
c₂. Durch das Schnittstellenmodul der Alarm-Box Steuerung der Alarm-Box entsprechend den empfangenen Betriebs-Befehlen, die aus einer Gruppe ausgewählt sind, die Stopp des Alarmtones, Ausschalten der Alarmanzeige, Einstellen von Alarmton-Parametern und Filtern von Alarmmeldungs-Rahmen umfasst;
c₃. Durch das Schnittstellenmodul der Alarm-Box Senden von Handshake-Signalen an das Vordergrundmodul der Alarm-Box unter Verwendung einer Weiterleitungs-Meldung von dem Meldungs-Verteilungs-Zentrum des Netzwerk-Management-Systems an das Vordergrundmodul der Alarm-Box, um zu bestätigen, dass das Alarm-Hintergrundmodul normal arbeitet.

6. Verfahren zur Verarbeitung von Alarmen für eine auf Netzwerk-Management ausgerichtete Alarm-Box gemäß Anspruch 1, wobei der Schritt d folgende Schritte umfasst:
d₁. Durch das Schnittstellenmodul der Alarm-Box Suchen nach Antwort-Rahmen und aktiven Berichts-Rahmen durch die Alarm-Box einmal pro Sekunde;
d₂. Durch das Schnittstellenmodul der Alarm-Box Unterscheidung der Arten der Berichts-Rahmen.

7. Verfahren zur Verarbeitung von Alarmen für eine auf Netzwerk-Management ausgerichtete Alarm-Box gemäß Anspruch 2, wobei der Schritt e folgende Schritte umfasst:
e₁. Durch das Schnittstellenmodul der Alarm-Box Durchführen der entsprechenden Operationen gemäß dem Typ der Berichts-Rahmen;
e₂. Wenn die Rahmen Handshake-Rahmen sind, senden von Antwort-Rahmen;
e₃. Wenn die Rahmen Wiederanlauf-Anforderungs-Rahmen sind, erneutes Senden aller Alarmmeldungs-Rahmen;
e₄. Wenn die Rahmen andere Berichts-Rahmen sind, Abruf des Wertes für das aufzurufende Alarm-Hintergrundmodul;
e₅. Wenn keine Rahmen von der Alarm-Box empfangen werden, zählen der Anzahl; wenn keine 5 aufeinander folgende Rahmen empfangen werden, erneuter Verbindungsaufbau; wenn in 3 aufeinander folgenden Verbindungs-Operationen kein Handshake-Rahmen zur Verfügung steht, Einstellen des Verbindungs-Status der Alarm-Box auf offline und Meldung an das Alarm-Hintergrundmodul;
e₆. Gleichzeitig überprüft das Schnittstellenmodul der Alarm-Box einmal pro Sekunde den Puffer für anstehende Meldungen, und sendet den gesamten Inhalt des Puffers für anstehende Meldungen an die Alarm-Box, so dass die Alarm-Box hörbare und/oder sichtbare Alarme senden kann.

8. Eine auf Netzwerk-Management ausgerichtete Alarm-Box für die Verarbeitung von Alarmen, umfassend:
Ein Alarm-Hintergrundmodul, das konstruiert ist, alle Alarmmeldungs-Rahmen von einem Netzwerk-Management-System zu empfangen und sie an ein Schnittstellenmodul der Alarm-Box weiterzuleiten;
Das Schnittstellenmodul der Alarm-Box, das konstruiert ist, die empfangenen Alarmmeldungs-Rahmen in Alarmmeldungs-Rahmen des Kommunikationsprotokolls einer Alarm-Box umzuwandeln, die Alarmmeldungs-Rahmen über eine serielle Schnittstelle zu der Alarm-Box zu senden, Betriebs-Befehle von einem Vordergrundmodul der Alarm-Box zu empfangen und die Alarm-Box entsprechend zu steuern;
Wobei die Alarm-Box konstruiert ist, die Alarmmeldungs-Rahmen nach ihrem Typ auf konzentrierte Weise zu verarbeiten und einen hörbaren und/oder sichtbaren Alarm zu senden.

9. Eine auf Netzwerk-Management ausgerichtete Alarm-Box gemäß Anspruch 8, wobei das Schnittstellenmodul der Alarm-Box folgendes umfasst:
Ein Modul, das Meldungs-Rahmen vom Alarm-Hintergrundmodul empfängt und umwandelt, das konstruiert ist, Alarmmeldungs-Rahmen und Einstellungs-Meldungs-Rahmen vom Alarm-Hintergrundmodul zu empfangen und die Alarmmeldungs-Rahmen und Einstellungs-Meldungs-Rahmen in Meldungs-Rahmen umzuwandeln, die vom Management-Modul der Alarm-Box empfangen werden können;
ein Modul, das die Meldungs-Rahmen analysiert, verarbeitet, filtert und speichert, das konstruiert ist, umgewandelte Meldungs-Rahmen zu filtern, analysieren und zu verarbeiten, und die Meldungs-Rahmen in das Format umzuwandeln, das von der Alarm-Box akzeptiert werden kann, und dann die Meldungs-Rahmen in einem Puffer für anstehende Meldungen zu speichern;
einen Puffer für anstehende Meldungen, der konstruiert ist, Meldungs-Rahmen in dem Format zu speichern, das von der Alarm-Box akzeptiert werden kann, und die Meldungs-Rahmen an die Alarm-Box zu senden; und
ein Modul zum Analysieren aktiver Berichts-Meldungs-Rahmen von der Alarm-Box, das konstruiert ist, Antwort-Rahmen oder aktive Berichts-Rahmen von der Alarm-Box zu empfangen, die Arten von Antwort-Rahmen und aktiven Berichts-Rahmen voneinander zu unterscheiden, und die Meldungs-Rahmen nach der Analyse und Bestimmung entsprechend dem Typ zu verarbeiten.

## Revendications

1. Procédé de traitement d'alarme pour boîtier d'alarme centralisé de gestion de réseau, comprenant les étapes suivantes :
a. dans un module d'alarme d'arrière-plan, réception de toutes les trames de message d'alarme provenant d'un système de gestion de réseau et transfert de ces trames à un module d'interface de boîtier d'alarme ;
b. dans ledit module d'interface de boîtier d'alarme, conversion des trames de message reçues en trames de message d'alarme selon le protocole de communication d'un boîtier d'alarme et envoi des trames de message d'alarme audit boîtier d'alarme via une interface série après traitement ; et
c. dans ledit module d'interface de boîtier d'alarme, réception de commandes opératives appartenant à un groupe constitué par les commandes d'arrêt de tonalité d'alarme, d'extinction d'indicateur d'alarme, de réglage des paramètres de tonalité d'alarme et de filtration de trames de message d'alarme, et commande correspondante dudit boîtier d'alarme ;
d. dans ledit module d'interface de boîtier d'alarme, extraction de trames de réponse et de trames de signalisation actives par ledit boîtier d'alarme et analyse et détermination des types de trames de signalisation ;
e. dans ledit module d'interface de boîtier d'alarme, traitement correspondant des trames de signalisation selon leur type et envoi du résultat audit boîtier d'alarme, qui envoie une alarme sonore et/ou visuelle.

2. Procédé de traitement d'alarme pour boîtier d'alarme centralisé de gestion de réseau selon la revendication 1, dans lequel l'étape b comprend les étapes consistant à :
b₁. définir des trames de message dudit module d'alarme d'arrière-plan en trames de message recevables par un module de gestion de boîtier d'alarme ;
b₂. envoyer les trames de message analysées et converties à un tampon de messages en attente dudit module d'interface de boîtier d'alarme.

3. Procédé de traitement d'alarme pour boîtier d'alarme centralisé de gestion de réseau selon la revendication 2, dans lequel, à l'étape b₁, ladite définition comprend la conversion de formats de trame et de niveaux d'alarme.

4. Procédé de traitement d'alarme pour boîtier d'alarme centralisé de gestion de réseau selon la revendication 2, dans lequel l'étape b₂ comprend les étapes consistant à :
b₂₁. déterminer le type des trames de message converties ; si les types définissent des trames de message, passage à l'étape b₂₅ ; dans le cas contraire :
b₂₂. filtrer les trames de message d'alarme en fonction des conditions de filtration qui y sont adjointes, filtrer ensuite les trames de message d'alarme résultantes en fonction des conditions de filtration contenues dans un fichier de configuration, puis éliminer les trames de message d'alarme qui ne seront pas envoyées audit boîtier d'alarme ;
b₂₃. analyser les trames de message d'alarme filtrées ; s'il s'agit de trames d'alarme de défaut, les convertir en trames de message d'alarme et enregistrer ces trames dans une liste de messages d'alarme, puis convertir les trames de message d'alarme résultantes au format acceptable par le boîtier d'alarme et les enregistrer dans ledit tampon de messages en attente ; s'il s'agit de trames d'alarme de rétablissement, les convertir au format acceptable par ledit boîtier d'alarme et les enregistrer dans ledit tampon de messages en attente, puis effacer les trames de message d'alarme correspondantes dans ladite liste d'alarmes ;
b₂₄. classer les trames d'alarme au format acceptable par le boîtier d'alarme dans ledit tampon de messages en attente par ordre de priorité, de telle sorte que les trames de message d'alarme à haute priorité puissent être envoyées en premier lieu au boîtier d'alarme ;
b₂₅. si les trames définissent des trames de message commandant l'allumage d'un indicateur spécifique, les traiter comme des trames de message d'alarme de défaut ; si les trames définissent des trames de message commandant l'extinction d'un indicateur spécifique, convertir ces trames en trames de message d'alarme, effacer toutes les trames d'alarme de défaut correspondantes dans la liste de messages d'alarme, puis convertir les trames de message d'alarme en trames au format acceptable par le boîtier d'alarme et enregistrer ces trames, le nombre d'opérations d'enregistrement étant ici égal à celui des opérations d'effacement ; si les trames sont d'autres trames de message de définition, les convertir directement en trames au format acceptable par ledit boîtier d'alarme afin de les enregistrer.

5. Procédé de traitement d'alarme pour boîtier d'alarme centralisé de gestion de réseau selon la revendication 1, dans lequel ladite étape c comprend les étapes consistant à :
c₁. dans un module de boîtier d'alarme d'avant-plan, envoyer les commandes opératives appartenant à un groupe constitué par les commandes d'arrêt de tonalité d'alarme, d'extinction d'indicateur d'alarme, de réglage des paramètres de tonalité d'alarme et de filtration de trames de message d'alarme vers le module d'interface de boîtier d'alarme, en utilisant un message de transfert depuis un centre de distribution de messagerie du système de gestion de réseau vers le module d'interface de boîtier d'alarme ;
C₂. dans ledit module d'interface de boîtier d'alarme, commander le boîtier d'alarme en fonction des commandes opératives reçues, appartenant à un groupe constitué par les commandes d'arrêt de tonalité d'alarme, d'extinction d'indicateur d'alarme, de réglage des paramètres de tonalité d'alarme et de filtration de trames de message d'alarme ;
C₃. dans ledit module d'interface de boîtier d'alarme, envoyer des signaux d'établissement de liaison au module de boîtier d'alarme d'avant-plan en utilisant un message de transfert depuis ledit centre de distribution de messagerie du système de gestion de réseau vers le module de boîtier d'alarme d'avant-plan, de manière à confirmer que ledit module d'alarme d'arrière-plan fonctionne normalement.

6. Procédé de traitement d'alarme pour boîtier d'alarme centralisé de gestion de réseau selon la revendication 1, dans lequel l'étape d comprend les étapes consistant à :
d₁. dans ledit module d'interface de boîtier d'alarme, rechercher des trames de réponse et des trames de signalisation actives au moyen dudit boîtier d'alarme toutes les secondes ;
d₂. dans ledit module d'interface de boîtier d'alarme, distinguer les types de trames de signalisation.

7. Procédé de traitement d'alarme pour boîtier d'alarme centralisé de gestion de réseau selon la revendication 2, dans lequel l'étape e comprend les étapes consistant à :
e₁. dans ledit module d'interface de boîtier d'alarme, exécuter les opérations correspondantes selon les types de trames de signalisation ;
e₂. si les trames sont des trames d'établissement de liaison, envoyer des trames de réponse ;
e₃. si les trames sont des trames de répétition de requête, renvoyer toutes les trames de message d'alarme de défaut ;
e₄. si les trames ne sont pas des trames de message de signalisation, extraire la valeur pour le module d'alarme d'arrière-plan à invoquer ;
e₅. si aucune trame n'est reçue du boîtier d'alarme, comptage de leur nombre ; si 5 trames successives ne sont pas reçues, rétablir la connexion ; si aucune trame d'établissement de liaison n'est disponible au cours de 3 opérations de connexion successives, établir l'état de connexion du boîtier d'alarme comme déconnecté et le signaler au module d'alarme d'arrière-plan ;
e₆. vérifier en même temps toutes les secondes ledit tampon de messages en attente au moyen du module d'interface de boîtier d'alarme et envoyer tout le contenu dudit tampon de messages en attente audit boîtier d'alarme, de telle manière que ledit boîtier d'alarme puisse envoyer des alarmes sonores et/ou visuelles.

8. Boîtier d'alarme centralisé de gestion de réseau pour le traitement d'alarmes comprenant :
un module d'alarme d'arrière-plan conçu pour recevoir toutes les trames de message d'alarme d'un système de gestion de réseau et pour les transférer vers un module d'interface de boîtier d'alarme ;
ledit module d'interface de boîtier d'alarme étant conçu pour convertir les trames de message d'alarme reçues en trames de message d'alarme dans le protocole de communication d'un boîtier d'alarme, envoyer les trames de message d'alarme audit boîtier d'alarme via une interface série, recevoir des commandes opératives d'un module de boîtier d'alarme d'avant-plan et commander ledit boîtier d'alarme de manière correspondante ;
ledit boîtier d'alarme étant conçu pour traiter les trames de message d'alarme par type de manière centralisée et envoyer une alarme sonore et/ou visuelle.

9. Boîtier d'alarme centralisé de gestion de réseau selon la revendication 8, dans lequel ledit module d'interface de boîtier d'alarme comprend :
un module recevant et convertissant des trames de message provenant du module d'alarme d'arrière-plan et conçu pour recevoir des trames de message d'alarme et définir des trames de message provenant du module d'alarme d'arrière-plan ainsi que convertir les trames de message d'alarme et définir des trames de message en trames de message qui peuvent être reçues par le module de gestion de boîtier d'alarme ;
un module analysant, traitant, filtrant et enregistrant les trames de message, conçu pour filtrer, analyser et traiter des trames de message converties et convertir les trames de message au format acceptable par le boîtier d'alarme, puis enregistrer les trames de message dans un tampon de messages en attente ;
un tampon de messages en attente conçu pour enregistrer des trames de message au format acceptable par ledit boîtier d'alarme et envoyer les trames de message audit boîtier d'alarme ; et
un module pour l'analyse de trames de message de signalisation actives par ledit boîtier d'alarme, conçu pour recevoir des trames de réponse ou des trames de signalisation actives au moyen dudit boîtier d'alarme, distinguer les types de trames de réponse et de trames de signalisation actives et traiter les trames de message par type correspondant après leur analyse et leur identification.
